# EUROPÄISCHE PATENTSCHRIFT

(11) **EP 1 306 237 B1**
(45) Veröffentlichungstag und Bekanntmachung des Hinweises auf die Patenterteilung: **09.04.2008**
(21) Anmeldenummer: 02023591.7
(22) Anmeldetag: 23.10.2002
(51) Int. Cl.: B60G 17/015, B60G 17/04, B60G 3/18

(54) **Radaufhängung für ein Kraftfahrzeug**
Motor vehicle wheel suspension
Suspension de roue de véhicule automobile

(30) Priorität: 23.10.2001 DE 10151580
(43) Veröffentlichungstag der Anmeldung: 02.05.2003
(73) Patentinhaber: ZF Lemförder Metallwaren AG, 49448 Lemförde (DE)
(72) Erfinder: Müller, Armin, 32369 Rahden (DE); Hartmann, Andreas, 49685 Höltinghausen (DE); Lückel, Joachim, Prof. Dr.-Ing., 33100 Paderborn (DE); Jäker, Karl-Peter, Dr.-Ing., 59597 Erwitte (DE); Nyenhuis, Markus, Dipl.-Ing., 33102 Paderborn (DE); Harchenko, Jewgenij, Dipl.-Ing., 33098 Paderborn (DE); Koch, Thorsten, Dipl.-Ing., 33098 Paderborn (DE)

(56) Entgegenhaltungen:
- WO-A-91/11339
- DE-A- 3 937 986
- US-A- 4 531 898
- PATENT ABSTRACTS OF JAPAN vol. 016, no. 026 (M-1202), 22. Januar 1992 (1992-01-22) -& JP 03 239619 A (KAYABA IND CO LTD), 25. Oktober 1991 (1991-10-25)
- PATENT ABSTRACTS OF JAPAN vol. 016, no. 452 (M-1313), 21. September 1992 (1992-09-21) -& JP 04 159112 A (KAYABA IND CO LTD), 2. Juni 1992 (1992-06-02)
- PATENT ABSTRACTS OF JAPAN vol. 1999, no. 13, 30. November 1999 (1999-11-30) -& JP 11 208234 A (UNISIA JECS CORP), 3. August 1999 (1999-08-03)

## Beschreibung

Die Erfindung betrifft eine Radaufhängung für ein Kraftfahrzeug nach dem Oberbegriff des Patentanspruches 1.

Radaufhängungen bei denen der Lenker zum Beispiel über ein Kugelgelenk an einem das Fahrzeugrad aufnehmenden Radträger und über ein Gummilager an dem Fahrzeugaufbau befestigt ist, sind aus dem Stand der Technik bekannt. Zwischen dem Lenker und dem Fahrzeugaufbau sind ferner ein Stoßdämpfer und eine Fahrzeugfeder angeordnet, von welcher der Fahrzeugaufbau im Abstand zu dem Fahrzeugrad gehalten wird. Der Fahrkomfort ist dabei in erheblicher Weise von der Federkennlinie der Fahrzeugfeder und von dem Dämpfungsverhalten des Stoßdämpfers abhängig.

Zum Verbessern der Wankeigenschaften bei Kurvenfahrten kann zusätzlich ein Stabilisator zwischen den beiden Fahrzeugrädern einer Achse des Kraftfahrzeugs angeordnet sein. Häufig wird als Stabilisator ein Torsionsfederstab verwendet, der mit seinem einen Ende über eine erste Pendelstütze mit einem ersten der beiden Fahrzeugräder und mit seinem anderen Ende über eine zweite Pendelstütze mit dem zweiten Fahrzeugrad verbunden ist, wobei der zwischen den beiden Enden liegende Mittelteil des Stabilisators am Fahrzeugaufbau gelagert ist. Die Pendelstützen können dabei mit ihren dem Stabilisator abgewandten Enden an den die Räder aufnehmenden Radträgern oder an den die Radträger mit dem Fahrzeugaufbau verbindenden Lenkern befestigt sein.

Eine derartige Radaufhängung hat aber den Nachteil, dass die Federkennlinie der Fahrzeugfeder, das Dämpfungsverhalten des Stoßdämpfers und die Federkennlinie des Stabilisators regelmäßig nicht verändert werden können, ohne eines dieser Bauteile durch ein anderes mit anderen Eigenschaften zu ersetzen.

Die gattungsbildende JP 3-239619 A weist eine Radaufhängung für ein Kraftfahrzeug mit einem zwischen einem Fahrzeugrad und dem Fahrzeugaufbau angeordneten Lenker, der mit seinem einen Ende schwenkbar mit dem Fahrzeugrad und mit seinem anderen Ende schwenkbar mit dem Fahrzeugaufbau verbunden ist, auf, wobei der Lenker über einen Schwenkmotor mit dem Fahrzeugaufbau verbunden und um die Schwenkachse des Schwenkmotors schwenkbar ist. WO 91/11339 A zeigt in Figur 3 ebenfalls eine Radaufhängung nach dem Oberbegriff des Anspruchs 1.

Darüber hinaus wird in der JP 4-159112 A eine Radaufhängung offenbart, bei der ein Lenker um einen Rotationsdämpfer schwenkbar mit dem Fahrzeugaufbau und mit einem Rad verbunden ist. Der Lenker weist eine Verlängerung auf, welche als Blattfeder ausgeführt wurde. Diese Feder ist nach dem Offenbarungsgehalt der Schrift im Drehpunkt des Lenker befestigt. Folglich ist diese Feder nicht an einer Verlängerung des Lenkers angebracht, sondern bildet selbst diese Verlängerung.

Ergänzend ist es aus der DE-AS 1 175 563 bekannt, den Stabilisator in zwei separate Stabilisatorstangen zu teilen, wobei die eine Stabilisatorstange fest mit dem Gehäuses und die andere Stabilisatorstange fest mit der Welle eines hydraulisch betriebenen Schwenkmotors verbunden ist. Damit wird es möglich, über eine Verdrehung der Motorwelle gegenüber dem Motorgehäuse den Stabilisator vorzuspannen, um in bestimmten Fahrsituationen die Eigenschaften des Fahrwerks aktiv beeinflussen zu können. Insbesondere kann somit das Wankverhalten des Kraftfahrzeugs in Kurvenfahrten in positiver Hinsicht verändert werden.

Eine derartige Vorrichtung zur Kurvenstabilisierung eines Kraftfahrzeugs weist allerdings den Nachteil auf, dass beide Räder einer Achse über den Stabilisator miteinander verbunden sind, was der Idee einer Einzelradaufhängung zuwiderläuft, das Fahrzeugrad separat an den Fahrzeugaufbau anzubinden.

Aufgabe der Erfindung ist es, eine Radaufhängung für ein Kraftfahrzeug zu schaffen, bei der die Eigenschaften der Anbindung des Fahrzeugrades an den Fahrzeugaufbau separat und aktiv beeinflusst werden können und der Fahrkomfort insgesamt verbessert wird.

Diese Aufgabe wird durch eine Radaufhängung mit den Merkmalen nach Patentanspruch 1 gelost. Bevorzugte Weiterbildungen sind in den Unteransprüchen beschrieben.

Erfindungsgemäß weist die Radaufhängung für ein Kraftfahrzeug einen zwischen einem Fahrzeugrad und dem Fahrzeugaufbau angeordneten Lenker auf, der mit seinem einen Ende schwenkbar mit dem Fahrzeugrad und mit seinem anderen Ende schwenkbar mit dem Fahrzeugaufbau gekoppelt ist. Der Lenker ist dabei über einen Schwenkmotor mit dem Fahrzeugaufbau verbunden und um die Schwenkachse des Schwenkmotors schwenkbar. Da der Lenker mit seinem dem Schwenkmotor abgewandten Ende an dem Fahrzeugrad befestigt ist, kann über das Betätigen des Schwenkmotors der Abstand zwischen dem Fahrzeugrad und dem Fahrzeugaufbau eingestellt werden. Ferner sind über den Schwenkmotor sowohl das Federungsverhalten als auch das Dämpfungsverhalten des Fahrzeugrades gegenüber dem Fahrzeugaufbau steuerbar, so dass die Eigenschaften der Anbindung des Fahrzeugrads an den Fahrzeugaufbau separat und aktiv beeinflusst werden können. Darüber hinaus kann der regelmäßig in Kraftfahrzeugen verwendete Stoßdämpfer entfallen, dessen Aufgabe nun von dem Schwenkmotor der erfindungsgemäßen Radaufhängung wahrnehmbar ist.

Mit dem Schwenkmotor kann auf eine Fahrzeugfeder verzichtet werden, wenn der Schwenkmotor während des Einsatzes des Kraftfahrzeugs einen ausreichenden Abstand zwischen dem Fahrzeugrad und dem Fahrzeugaufbau aufrechterhält. Ein derartiger Betrieb des Schwenkmotors bringt aber einen hohen Energieverbrauch mit sich, so dass zwischen dem Fahrzeugrad und dem Fahrzeugaufbau eine Fahrzeugfeder angeordnet ist, die mittelbar oder unmittelbar mit ihrem einen Ende mit dem Fahrzeugrad und mit ihrem anderen Ende mit dem Fahrzeugaufbau verbunden ist.

Unter einer unmittelbaren Verbindung der Fahrzeugfeder mit dem Fahrzeugrad ist dabei zum Beispiel die Anbindung des einen Endes der Fahrzeugfeder an einen das Fahrzeugrad aufnehmenden Radträger zu verstehen. Bei einer mittelbaren Verbindung der Fahrzeugfeder mit dem Fahrzeugrad kann das eine Ende der Fahrzeugfeder auch an einem das Fahrzeugrad mit dem Fahrzeugaufbau verbindenden Fahrwerkbauteil befestigt sein, wobei die Fahrzeugfeder mit ihrem einen Ende im Abstand zum Schwenkmotor bzw. zum Fahrzeugaufbau an dem Lenker befestigt ist.

Falls die Fahrzeugfeder mit ihrem einen Ende an dem Lenker befestigt ist, kann sie weit in den Raumbereich zwischen dem Fahrzeugrad und dem Fahrzeugaufbau hineinreichen.

Dieser Raumbereich ist aber häufig für andere Bauteile im Kraftfahrzeug vorgesehen, so dass der Lenker eine über seinen Anbindungspunkt an dem Schwenkmotor bzw. dem Fahrzeugaufbau hinausreichende Verlängerung aufweist, an welcher die Fahrzeugfeder mit ihrem einen Ende befestigt ist. Somit ist es möglich, die Fahrzeugfeder in nur einem kleinen Bereich innerhalb oder sogar vollständig außerhalb dieses Raumbereiches anzuordnen.

Der Schwenkmotor kann entsprechend einer Ausgestaltung der Erfindung unmittelbar mit dem Lenker und/oder dem Fahrzeugaufbau verbunden sein. Bevorzugt ist zwischen dem Schwenkmotor und dem Lenker und/oder zwischen dem Schwenkmotor und dem Fahrzeugaufbau aber ein mechanisches Dämpfungselement angeordnet, welches vom Schwenkmotor ausgehende ruckartige Bewegungen gedämpft an den Lenker und/oder den Fahrzeugaufbau weitergibt wodurch der Fahrkomfort erhöht wird.

Die Fahrzeugfeder kann eine Elastomerfeder oder eine Stahlfeder zum Beispiel in Form einer Schraubenfeder sein, die hinsichtlich ihrer Federkennlinie ein nahezu identisches Verhalten bei statischer und dynamischer Belastung aufweist. Bevorzugt ist die Fahrzeugfeder aber eine Luftfeder, die eine über den Luftdruck variierbare Federkennlinie und Unterschiede in ihrem dynamischen und in ihrem statischen Verhalten aufweist, so dass das Federverhalten der Radaufhängung in gewünschter Weise an unterschiedliche Fahrsituationen angepasst werden kann, ohne die Fahrzeugfeder selbst austauschen zu müssen.

Der Schwenkmotor kann elektrisch oder pneumatisch betrieben werden. Bevorzugt wird der Schwenkmotor jedoch hydraulisch betrieben und ist über Hydraulikleitungen mit einer geregelten Hydraulikpumpe verbunden, da ein hydraulisch betriebener Schwenkmotor regelmäßig schneller gesteuert werden kann als ein rein pneumatisch betriebener Schwenkmotor, bei dem die große Kompressibilität der Luft einer schnellen Steuerbarkeit entgegenwirkt. Bei dem an sich ausreichend schnellen elektrischen Schwenkmotor stellt sich im Kraftfahrzeug das Problem der elektrischen Energieversorgung. Eine plötzlich auftretende Lasterhöhung kann mit einem großen elektrischen Leistungsbedarf verbunden sein, der aufgrund der verwendeten Kraftfahrzeugbatterie mit einer Spannung von 12V oder 24V häufig nicht gedeckt werden kann.

Die Hydraulikpumpe kann zum Beispiel in Form einer Zahnradpumpe ausgeführt sein. Bevorzugt ist die Hydraulikpumpe aber eine elektrisch angetriebene Flügelzellenpumpe, da diese schneller zwischen unterschiedlichen hydraulischen Druckstufen hin- und hergeschaltet werden kann.

Die Hydraulikpumpe kann mechanisch, elektrisch oder pneumatisch geregelt werden. Bevorzugt weist die Hydraulikpumpe aber eine mit den Hydraulikleitungen verbundene hydraulische Regeleinrichtung zum Aufrechterhalten einer vorbestimmten hydraulischen Druckdifferenz (Sollwert) zwischen den Drücken in den Hydraulikleitungen auf, da eine hydraulische Regelung sehr systemnah und zum Beispiel ohne die Umwandlung von mechanischen in elektrische Größen realisiert werden kann.

Die vorbestimmte hydraulische Druckdifferenz zwischen den Drücken in den Hydraulikleitungen kann unveränderbar sein. Bevorzugt ist aber mit der Hydraulikpumpe ein elektrisch gesteuerter Sollwertgeber zum Einstellen der vorbestimmten hydraulischen Druckdifferenz gekoppelt. Damit wird berücksichtigt, dass zum Beispiel je nach Beladungszustand des Kraftfahrzeugs ein unterschiedlicher Sollwert für die hydraulische Regeleinrichtung eingestellt werden kann. Anstelle eines elektrisch gesteuerten Sollwertgebers kann allerdings auch ein mechanisch, pneumatisch oder hydraulisch gesteuerter Sollwertgeber verwendet werden.

Die Erfindung wird anhand bevorzugter Ausführungsformen unter Bezugnahme auf die Zeichnung beschrieben. In der Zeichnung zeigen:
- Figur 1:: eine skizzenhafte Darstellung einer Ausführungsform einer nicht erfindungsgemäßen Radaufhängung,
- Figur 2:: eine skizzenhafte Darstellung einer Ausführungsform der erfindungsgemäßen Radaufhängung und
- Figur 3:: eine detaillierte Prinzipdarstellung einer geregelten Flügelzellenpumpe, die als Hydraulikpumpe für die beiden Ausführungsformen nach den Figuren 1 und 2 verwendet werden kann.

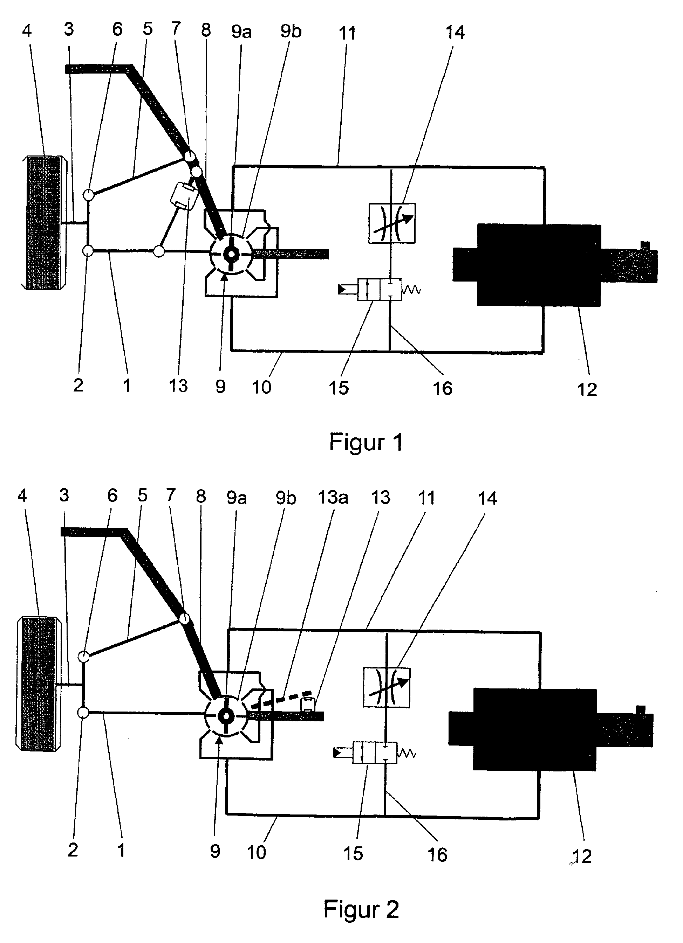

Aus Figur 1 ist eine skizzenhafte Darstellung einer Ausführungsform einer nicht erfindungsgemäßen Radaufhängung ersichtlich. Ein unterer Querlenker 1 ist mit seinem einen Ende über ein Kugelgelenk 2 schwenkbar an einem Radträger 3 befestigt, an welchem das Fahrzeugrad 4 angeordnet ist. Ferner ist ein oberer Querlenker 5 mit seinem einen Ende über ein Kugelgelenk 6 an dem Radträger 3 und mit seinem anderen Ende über ein Gummigelenk 7 an dem Fahrzeugaufbau 8 schwenkbar gelagert. Das andere Ende des unteren Querlenkers 1 ist mit der Motorwelle 9a eines Schwenkmotors 9 verbunden, dessen Gehäuse 9b an dem Fahrzeugaufbau 8 befestigt ist.

Der Schwenkmotor 9 ist über eine erste Hydraulikleitung 10 und über eine zweite Hydraulikleitung 11 mit einer Hydraulikpumpe 12 verbunden, von welcher dem hydraulischen Schwenkmotor 9 Hydraulikflüssigkeit zugeführt werden kann. Je nachdem, ob die Hydraulikflüssigkeit durch die Hydraulikleitung 10 oder durch die Hydraulikleitung 11 in den Schwenkmotor 9 strömt, kann der untere Querlenker 1 zusammen mit dem Fahrzeugrad 4 zu dem Fahrzeugaufbau 8 hingeschwenkt bzw. von diesem weggeschwenkt werden.

Zur Aufnahe von zumindest einem Teil der von dem Fahrzeugaufbau 8 auf das Fahrzeugrad 4 ausgeübten Last ist zwischen dem unteren Querlenker 1 und dem Fahrzeugaufbau 8 eine als Luftfeder ausgebildete Fahrzeugfeder 13 angeordnet, die mit ihrem einen Ende im Abstand zu der Motorwelle 9a an dem unteren Querlenker 1 und mit ihrem anderen Ende an dem Fahrzeugaufbau 8 befestigt ist und somit den Schwenkmotor 9 beim Aufrechterhalten des Abstands zwischen dem Fahrzeugrad 4 und dem Fahrzeugaufbau 8 entlastet. Zwar ist die Fahrzeugfeder 13 nach dieser Ausführungsform mit ihrem einen Ende an dem unteren Querlenker 1 befestigt, allerdings ist es nach einer anderen Ausführungsform auch möglich, die Fahrzeugfeder 13 mit ihrem einen Ende an dem oberen Querlenker 5 zu befestigen.

Für den Fall, dass aufgrund eines Defekts in der Hydraulikpumpe 12 keine Hydraulikflüssigkeit mehr zwischen den beiden Hydraulikleitungen 10 und 11 über die Hydraulikpumpe 12 ausgetauscht werden kann, ist zwischen den Hydraulikleitungen 10 und 11 eine Reihenschaltung aus einer Hydraulikdrossel 14 und einem Ventil 15 vorgesehen, so dass über ein Öffnen des Ventils 15 eine Nebenleitung (Bypass) 16 zwischen den beiden Hydraulikleitungen 10 und 11 mit einem über die Hydraulikdrossel 14 eingestellten Strömungswiderstand für die Hydraulikflüssigkeit eingerichtet werden kann. Damit ist es möglich, trotz eines Ausfalls der Hydraulikpumpe 12 die Motorwelle 9a des Schwenkmotors 9 zu bewegen und den unteren Querlenker 1 zu schwenken, wobei die Nebenleitung 16 wie ein Stoßdämpfer wirkt, dessen Eigenschaften über die Hydraulikdrossel 14 eingestellt werden können. Das Ventil 15 wird von einer nicht dargestellten elektronischen Steuerungs- und Überwachungseinrichtung betätigt, die den Ausfall der Hydraulikpumpe 12 über geeignete Sensoren erfassen kann.

Aus Figur 2 ist eine skizzenhafte Darstellung einer Ausführungsform der erfindungsgemäßen Radaufhängung ersichtlich, wobei für identische oder funktionsidentische Merkmale dieselben Bezugszeichen wie bei der ersten Ausführungsform verwendet werden. Der untere Querlenker 1 weist eine über seinen Anlenkungspunkt an den Fahrzeugaufbau 8 hinausreichende Verlängerung 13a auf, an welcher die Fahrzeugfeder 13 im Abstand zu der Motorwelle 9a mit ihrem einen Ende befestigt ist. Bis auf die Verlängerung 13a des Lenkers 1 und die Befestigung der Fahrzeug feder 13 an dieser Verlängerung 13a stimmt die erfindungsgemäße Ausführungsform mit der nicht erfindungsgemäßen Ausführungsform überein.

Durch das Ausbilden der Verlängerung 13a an dem unteren Querlenker 1 ist es möglich geworden, die Fahrzeugfeder 13 außerhalb des Raumes zwischen dem Fahrzeugaufbau 8 und dem Fahrzeugrad 4 anzuordnen, so dass dieser Raum für das Anordnen von anderen Kraftfahrzeugbauteilen verwendet werden kann.

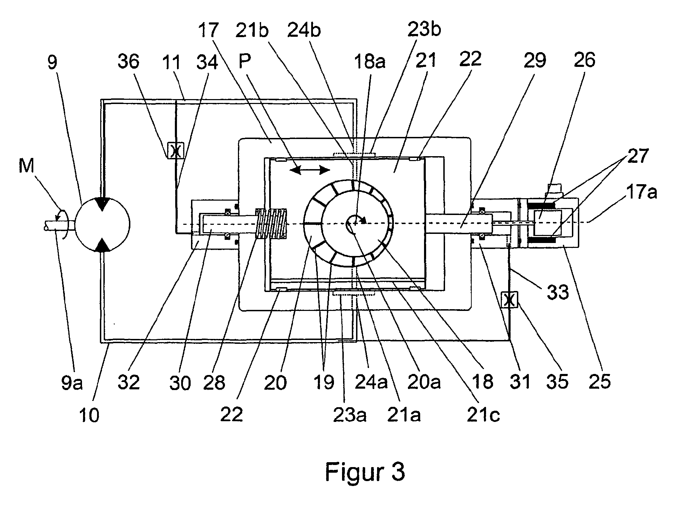

Aus Figur 3 ist eine detaillierte Prinzipdarstellung einer geregelten Flügelzellenpumpe ersichtlich, die als Hydraulikpumpe 12 für die beiden Ausführungsformen nach den Figuren 1 und 2 verwendet werden kann. Aus Gründen der Übersichtlichkeit sind die Hydraulikdrossel 14, das Ventil 15 und die Nebenleitung 16 nicht in dieser Figur dargestellt.

Die Hydraulikpumpe 12 ist in Form einer Flügelzellenpumpe realisiert, die eine in einem Gehäuse 17 drehbar gelagerte und über einen Elektromotor (nicht gezeigt) angetriebene Welle 18 aufweist, die drehbar und flüssigkeitsdicht in dem Gehäuse 17 gelagert ist. In der Welle 18 sind rings ihres Umfangs mehrere, radial nach außen abstehende Lamellen 19 angeordnet, die ihren radialen Abstand zur Mittellinie 18a der Welle 18 in einer für Flügelzellenpumpen üblichen Art und Weise variieren können. Die Welle 18 ist in einer zylinderförmigen und mit Hydraulikflüssigkeit gefüllten Pumpenkammer 20 angeordnet, die in einem in dem Gehäuse 17 angeordneten Hubkolben 21 ausgebildet ist, der senkrecht zur Mittellinie 18a der Welle 18 in Richtung des Pfeils P über Führungsbänder bzw. Kolbenringe 22 in dem Gehäuse 17 verschiebbar gelagert ist.

Senkrecht zur Mittelachse 18a der Welle 18 und senkrecht zur Bewegungsrichtung P sind zwei entgegengesetzt verlaufende Durchführungen 21a und 21b (gestrichelt dargestellt) in dem Hubkolben 21 ausgebildet, die sich von der Pumpenkammer 20 durch den Hubkolben 21 hindurch in eine erste Übergangskammer 23a bzw. in eine zweite Übergangskammer 23b erstrecken. Die beiden Übergangskammern 23a und 23b (gestrichelt dargestellt) sind ihrerseits über zwei entgegengesetzt verlaufende und sich durch das Gehäuse 17 hindurcherstreckende zusätzliche Durchführungen 24a und 24b (gestrichelt dargestellt) mit den Hydraulikleitungen 10 bzw. 11 verbunden und liegen hinsichtlich der Mittelachse 17a (gestrichelt dargestellt) des Gehäuses 17 einander diametral gegenüber. Somit ist eine Verbindung der Pumpenkammer 20 über die erste Übergangskammer 23a mit der ersten Hydraulikleitung 10 und eine Verbindung der Pumpenkammer 20 über die zweite Übergangskammer 23b mit der zweiten Hydraulikleitung 11 unter Zwischenschaltung der Durchführungen 21a, 21b, 24a und 24b geschaffen. Zwar sind die beiden Übergangskammern 23a und 23b gemäß dieser Ausführungsform in der Innenwandung des Gehäuses 17 ausgebildet, allerdings können sie nach einer anderen Ausführungsform auch in der Mantelfläche des Hubkolbens 21 vorgesehen sein.

Je nach Stellung des Hubkolbens 21 lässt sich die von der Hydraulikpumpe 12 geförderte Menge an Hydraulikflüssigkeit einstellen, wobei in derjenigen Stellung des Hubkolbens 21, in der die Pumpenkammer 20 konzentrisch zur Welle 18 angeordnet ist, keine Hydraulikflüssigkeit gefördert wird.

Aufgrund der Fliehkraft oder aufgrund der Federkraft von in der Welle 18 angeordneten Federn (nicht gezeigt) werden die Lammellen 19 radial nach außen aus der Welle 18 herausgedrückt und liegen mit ihren der Mittellinie 18a der Welle 18 abgewandten Enden an der Innenwandung der Pumpenkammer 20 an. Wie aus Figur 3 ersichtlich, ist der Hubkolben 21- und damit auch die Mittellinie 20a der Pumpenkammer 20 - gegenüber der Mittellinie 18a der Welle 18 nach links verschoben, so dass eine Exzentrizität zwischen der Pumpenkammer 20 und der Welle 18 ausgebildet ist. Diese Exzentrizität hat zur Folge, dass die Lamellen 19 auf der rechten Seite kürzer aus der Welle 18 heraustreten als auf der linken Seite, so dass bei einer Drehung der Welle im Uhrzeigersinn mehr Hydraulikflüssigkeit aus dem unteren Bereich der Pumpenkammer 20 heraustransportiert als hineintransportiert wird. Daher fördert die Hydraulikpumpe 12 bei dieser Betriebsweise die Hydraulikflüssigkeit aus der ersten Übergangskammer 23a heraus, durch die Pumpenkammer 20 hindurch und in die zweite Übergangskammer 23b hinein. In diesem Fall fließt die Hydraulikflüssigkeit also von der Hydraulikpumpe 12 durch die zweite Hydraulikleitung 11 in den hydraulischen Schwenkmotor 9 hinein, so dass dieser ein im Sinne des Pfeils M orientiertes Drehmoment an die Motorwelle 9a abgibt. Danach fließt die Hydraulikflüssigkeit von dem hydraulischen Schwenkmotor 9 durch die erste Hydraulikleitung 10 wieder zurück in die Hydraulikpumpe 12.

Wird der Hubkolben 21 derart verschoben, dass die Mittellinie 20a der Pumpenkammer 20 rechts von der Mittellinie 18a der Welle 18 liegt, so führt diese Exzentrizität von Pumpenkammer 20 und Welle 18 dazu, dass die Hydraulikflüssigkeit aus der zweiten Übergangskammer 23b heraus, durch die Pumpenkammer 20 hindurch und in die erste Übergangskammer 23a hinein gefördert wird. In diesem Fall fließt die Hydraulikflüssigkeit von der Hydraulikpumpe 12 durch die erste Hydraulikleitung 10 in den Schwenkmotor 9, so dass dieser ein im entgegengesetzten Sinne des Pfeils M orientiertes Drehmoment an die Motorwelle 9a abgibt. Danach fließt die Hydraulikflüssigkeit von dem hydraulischen Schwenkmotor 9 durch die zweite Hydraulikleitung 11 wieder zurück in die Hydraulikpumpe 12.

Über die Verschiebung des Hubkolbens 21 in dem Gehäuse 17 längs der Mittellinie 17a lässt sich also einstellen, in welche Richtung und mit welchem Durchsatz die Hydraulikflüssigkeit von der Hydraulikpumpe 12 gefördert wird. Damit wird aber auch gleichzeitig die Druckdifferenz zwischen den Drücken in den beiden Hydraulikleitungen 10 und 11 eingestellt, welche das von dem Motor 9 über die Motorwelle 9a abgegebene Drehmoment bestimmt, über welches der Schwenkwinkel des unteren Querlenkers 1 und somit auch der Abstand des Fahrzeugrades 4 vom Fahrzeugaufbau 8 einstellbar ist. Die beiden zwischen den Stirnseiten des Hubkolbens 21 und dem Gehäuse 17 gebildeten Kammern sind dabei über wenigstens eine in der Mantelfläche des Hubkolbens 21 ausgebildete Kompensationsnut 21c miteinander verbunden, durch welche beim Verschieben des Hubkolbens 21 Hydraulikflüssigkeit zwischen den beiden Kammern ausgetauscht werden kann. Nach einer anderen Ausführungsform kann anstelle oder ergänzend zu der Kompensationsnut 21c auch eine diese Kammern verbindende Leitung im Gehäuse 17 oder eine Bohrung im Hubkolben 21 vorgesehen sein.

Um ein vorbestimmtes Drehmoment an die Motorwelle 9b des hydraulischen Schwenkmotors 9 abzugeben, wird eine dem vorbestimmten Drehmoment entsprechende hydraulische Druckdifferenz zwischen den Drücken in den beiden Hydraulikleitungen 10 und 11 als Sollwertdruckdifferenz über einen Sollwertgeber 25 eingestellt, der einen mechanisch mit einer der beiden Stirnseiten des Hubkolbens 21 gekoppelten und aus magnetischem Werkstoff hergestellten Stellkolben 26 aufweist, welcher verschiebbar in einer elektrischen Spule 27 angeordnet ist. Die elektrische Spule 27 wird über ein elektronisches Steuergerät (nicht gezeigt) derart angesteuert, dass auf den Stellkolben 26 über das von der elektrischen Spule 27 erzeugte Magnetfeld eine Stellkraft ausgeübt wird, die wegen der mechanischen Kopplung des Stellkolbens 26 mit der einen Stirnseite des Hubkolbens 21 auch gleichzeitig auf den Hubkolben 21 wirkt. Da eine aus der Stellkraft resultierende Verschiebung des Hubkolbens 21 eine Veränderung der hydraulischen Druckdifferenz zwischen den Drücken in den beiden Hydraulikleitungen 10 und 11 bewirkt, kann über den Sollwertgeber 25 die gewünschte Sollwertdruckdifferenz eingestellt werden, indem der Hubkolben 21 in eine der Sollwertdruckdifferenz zugeordnete Sollwertposition verschoben wird. Die Frequenz, mit welcher der Hubkolben 21 von dem Sollwertgeber 25 zwischen unterschiedlichen Sollwertpositionen hin- und hergeschoben werden kann, lag in einem Versuchsaufbau bei ungefähr 5 Hz.

Wie aus Figur 3 ersichtlich, ist der Hubkolben 21 mit seiner anderen Stirnseite mit dem Gehäuse 17 der Hydraulikpumpe 12 über eine mechanische Feder 28 gekoppelt, die derart dimensioniert ist, dass die Pumpenkammer 20 in die konzentrische Position mit der Welle 18 gebracht wird, wenn ausschließlich die Kraft der mechanischen Feder 28 auf den Hubkolben 21 wirkt. Die mechanische Feder 28 hat somit unter anderem die Funktion, den Hubkolben 21 nach dem Ausschalten oder dem Ausfall der Hydraulikpumpe 12 in eine bestimmte Position zu bringen, damit beim Einschalten der Hydraulikpumpe 12 ein definierter Startzustand für den Hubkolben 21 vorliegt.

Nachdem die Sollwertdruckdifferenz eingestellt ist, wird die elektrische Spule 27 von dem elektronischen Steuergerät derart angesteuert, dass der Sollwertgeber 25 eine zum Aufrechterhalten der Sollwertdruckdifferenz ausreichende Kraft aufbringt. Der Hubkolben 21 kann somit als zwischen zwei Federn 25 und 28 gelagert betrachtet werden, wobei die von der durch den Sollwertgeber 25 gebildeten Feder abgegebene Kraft über das elektronische Steuergerät einstellbar ist. Kommt es aufgrund einer Störung zu einer Verschiebung des Hubkolbens 21, so stellen die Federn 25 und 28 nach Abklingen dieser Störung den Hubkolben 21 wieder in seine Sollwertposition zurück.

Anstelle des in der elektrischen Spule 27 verschiebbar angeordneten Stellkolbens 26 aus magnetischem Werkstoff kann nach einer anderen Ausführungsform für den Sollwertgeber 25 auch ein Elektromotor verwendet werden, der über ein Getriebe ein lineares Stellglied antreibt, das über eine mechanische Feder mit dem Hubkolben 21 gekoppelt ist.

Mit den beiden Stirnseiten des Hubkolbens 21 ist jeweils ein zylinderförmiger Steuerkolben 29, 30 mechanisch gekoppelt, wobei ein erster der Steuerkolben 29 gleitfähig und flüssigkeitsdicht in einen einseitig geschlossenen ersten Hohlzylinder 31 und der zweite Steuerkolben 30 gleitfähig und flüssigkeitsdicht in einen einseitig geschlossenen zweiten Hohlzylinder 32 eingreift. Die zwischen den Steuerkolben 29 und 30 und der Innenwandung der beiden Hohlzylinder 31 und 32 gebildeten Hydraulikkammern sind jeweils mit Hydraulikflüssigkeit gefüllt und über zwei hydraulische Steuerleitungen 33 und 34 unter Zwischenschaltung von zwei hydraulischen Drosseln 35 und 36 mit der ersten bzw. der zweiten Hydraulikleitung 10, 11 verbunden, so dass mit dieser Anordnung eine hydraulische Regelung realisiert ist, die unter Berücksichtigung der aktuellen hydraulischen Druckdifferenz zwischen den Drücken in den beiden Hydraulikleitungen 10 und 11 die Sollwertdruckdifferenz aufrechterhält.

Kommt es aufgrund einer Lastschwankung im Schwenkmotor 9 zu einer Veränderung in der hydraulischen Druckdifferenz (Druckdifferenzschwankung) zwischen den Drücken in den beiden Hydraulikleitungen 10 und 11, so wird diese Druckdifferenzschwankung über die beiden Steuerleitungen 33 und 34 an die Hydraulikkammern in den beiden Hohlzylindern 31 und 32 weitergegeben. Die daraus resultierende Änderung des Drucks in den Hohlzylindern 31, 32 bewirkt eine Verschiebung der beiden Steuerkolben 29 und 30, was wegen der mechanischen Kopplung der Steuerkolben 29, 30 mit dem Hubkolben 21 auch zu einer Verschiebung des Hubkolbens 21 führt. Diese Verschiebung des Hubkolbens 21 bewirkt schließlich eine der Druckdifferenzschwankung entgegenwirkende Veränderung der von der Pumpe geförderten Menge an Hydraulikflüssigkeit. Die Steuerkolben 29 und 30, die Hohlzylinder 31 und 32, die Steuerleitungen 33 und 34 und die Drosseln 35 und 36 bilden somit zusammen eine hydraulische Regeleinrichtung, die bis in den Bereich der Radfrequenz, das heißt bis ca. 20 Hz arbeiten kann.

### Bezugszeichenliste:

- 1: unterer Querlenker
- 2: Kugelgelenk für unteren Querlenker
- 3: Radträger
- 4: Fahrzeugrad
- 5: oberer Querlenker
- 6: Kugelgelenk für oberen Querlenker
- 7: Gummilager für oberen Querlenker
- 8: Fahrzeugaufbau
- 9: hydraulischer Schwenkmotor
- 9a: Welle des hydraulischen Schwenkmotors
- 9b: Gehäuse des hydraulischen Schwenkmotors
- 10: erste Hydraulikleitung
- 11: zweite Hydraulikleitung
- 12: Hydraulikpumpe
- 13: Fahrzeugfeder
- 13a: Verlängerung des unteren Querlenkers zur Aufnahme der Fahrzeugfeder
- 14: Drossel für Nebenleitung
- 15: Ventil für Nebenleitung
- 16: Nebenleitung
- 17: Gehäuse der Hydraulikpumpe
- 17a: Mittellinie des Gehäuses und des Hubkolbens
- 18: Welle
- 18a: Mittellinie der Welle
- 19: Lamellen
- 20: zylinderförmige Pumpenkammer
- 20a: Mittellinie der zylinderförmigen Pumpenkammer
- 21: Hubkolben
- 21a: Durchführung von der Pumpenkammer zur ersten Übergangskammer
- 21b: Durchführung von der Pumpenkammer zur zweiten Übergangskammer
- 21c: Kompensationsnut
- 22: Führungsbänder
- 23a: erste Übergangskammer
- 23b: zweite Übergangskammer
- 24a: Durchführung von ersten Übergangskammer zur ersten Hydraulikleitung
- 24b: Durchführung von der zweiten Übergangskammer zur zweiten Hydraulikleitung
- 25: Sollwertgeber
- 26: Stellkolben
- 27: elektrische Spule
- 28: mechanische Feder
- 29: erster Steuerkolben
- 30: zweiter Steuerkolben
- 31: erster Hohlzylinder
- 32: zweiter Hohlzylinder
- 33: erste Steuerleitung
- 34: zweite Steuerleitung
- 35: erste Drossel
- 36: zweite Drossel
- P: die Bewegungsrichtung des Hubkolbens symbolisierender Pfeil
- M: die Orientierung des Drehmoments symbolisierender Pfeil

## Patentansprüche

1. Radaufhängung für ein Kraftfahrzeug, mit einem zwischen einem Fahrzeugrad (4) und dem Fahrzeugaufbau (8) angeordneten Lenker (1), der mit seinem einen Ende schwenkbar mit dem Fahrzeugrad (4) und mit seinem anderen Ende schwenkbar mit dem Fahrzeugaufbau (8) verbunden ist, wobei der Lenker (1) über einen Schwenkmotor (9) mit dem Fahrzeugaufbau (8) verbunden und um die Schwenkachse des Schwenkmotors (9) schwenkbar ist,
**dadurch gekennzeichnet, dass**
zwischen dem Fahrzeugrad (4) und dem Fahrzeugaufbau (8) eine Fahrzeugfeder (13) angeordnet ist, die mittelbar oder unmittelbar mit ihrem einen Ende mit dem Fahrzeugrad (4) und mit ihrem anderen Ende mit dem Fahrzeugaufbau (8) verbunden sowie mit ihrem einen Ende im Abstand zum Schwenkmotor (9) an dem Lenker (1) befestigt ist, wobei der Lenker (1) eine über seine Anbindung an den Schwenkmotor (9) hinausreichende Verlängerung (13a) aufweist, an welcher die Fahrzeugfeder (13) mit ihrem einen Ende befestigt ist.

2. Radaufhängung nach Anspruch 1, **dadurch gekennzeichnet, dass** zwischen dem Schwenkmotor (9) und dem Lenker (1) und/oder zwischen dem Schwenkmotor (9) und dem Fahrzeugaufbau (8) ein mechanisches Dämpfungselement angeordnet ist.

3. Radaufhängung nach einem der Ansprüche 1 oder 2, **dadurch gekennzeichnet, dass** die Fahrzeugfeder (13) eine Luftfeder ist.

4. Radaufhängung nach einem der Ansprüche 1 bis 3, **dadurch gekennzeichnet, dass** der Schwenkmotor (9) hydraulisch betrieben und über Hydraulikleitungen (10, 11) mit einer geregelten Hydraulikpumpe (12) verbunden ist.

5. Radaufhängung nach Anspruch 4, **dadurch gekennzeichnet, dass** die Hydraulikpumpe (12) eine elektrisch betriebene Flügelzellenpumpe ist.

6. Radaufhängung nach Anspruch 4 oder 5, **dadurch gekennzeichnet, dass** die Hydraulikpumpe (12) eine mit den Hydraulikleitungen (10, 11) verbundene hydraulische Regeleinrichtung (29, 30, 31, 32, 33, 34, 35, 36) zum Aufrechterhalten einer vorbestimmten hydraulischen Druckdifferenz zwischen den Drücken in den Hydraulikleitungen (10, 11) aufweist.

7. Radaufhängung nach Anspruch 6, **dadurch gekennzeichnet, dass** mit der Hydraulikpumpe (12) ein elektrisch gesteuerter Sollwertgeber (25) zum Einstellen der vorbestimmten hydraulischen Druckdifferenz gekoppelt ist.

## Claims

1. wheel suspension for a motor vehicle with a steering wheel (1) disposed between a vehicle wheel (4) and the vehicle body (8), which is pivotably connected to the vehicle wheel (4) by its one end and pivotably connected to the vehicle body (8) by its other end, and the steering wheel (1) is connected to the vehicle body (8) via a pivot motor (9) and is able to pivot about the pivot axis of the pivot motor (9),
**characterised in that**
a vehicle spring (13) is disposed between the vehicle wheel (4) and the vehicle body (8), which is directly or indirectly connected to the vehicle wheel (4) by its one end and to the vehicle body (8) by its other end, and is secured to the steering wheel (1) at a distance from the pivot motor (9) by its one end, and via its corillection to the pivot motor (9) the steering wheel (1) has a sufficient extension (13a) to which the vehicle spring (13) is secured by its one end.

2. Wheel suspension as claimed in claim 1, **characterised in that** a mechanical damping element is disposed between the pivot motor (9) and the steering wheel (1) and/or between the pivot motor (9) and the vehicle body (8).

3. Wheel suspension as claimed in one of claims 1 or 2,
**characterised in that** the vehicle spring (13) is a pneumatic spring.

4. Wheel suspension as claimed in one of claims 1 to 3, **characterised in that** the pivot motor (9) is hydraulically operated and is connected via hydraulic lines (10, 11) to an automatically controlled hydraulic pump (12).

5. Wheel suspension as claimed in claim 4, **characterised in that** the hydraulic pump (12) is an electrically operated vane pump.

6. Wheel suspension as claimed in claim 4 or 5, **characterised in that** the hydraulic pump (12) has an automatic hydraulic control system (29, 30, 31, 32, 33, 34, 35, 36) connected to the hydraulic lines (10, 11) for maintaining a predefined hydraulic pressure difference between the pressures in the hydraulic lines (10, 11).

7. Wheel suspension as claimed in claim 6, **characterised in that** an electrically controlled desired value transmitter (25) is coupled with the hydraulic pump (12) for setting the predefined hydraulic pressure difference.

## Revendications

1. Suspension de roue pour un véhicule automobile avec un bras de contrôle (1) disposé entre une roue de véhicule (4) et la carrosserie de véhicule (8), qui est relié, par l'une de ses extrémités, de manière à pouvoir pivoter, à la roue de véhicule (4) et, par son autre extrémité, de manière à pouvoir pivoter avec la carrosserie de véhicule (8), le bras de contrôle (1) étant relié par un moteur de pivotement (9) à la carrosserie de véhicule (8) et pouvant pivoter autour de l'axe de pivotement du moteur de pivotement (9),
**caractérisée en ce que**
entre la roue de véhicule (4) et la carrosserie de véhicule (8) est disposé un ressort de véhicule (13) qui est relié directement ou indirectement, par l'une de ses extrémités, à la roue de véhicule (4) et, par son autre extrémité, à la carrosserie de véhicule (8), et est fixé, par l'une de ses extrémités, à distance du moteur de pivotement (9), au bras de contrôle (1), le bras de contrôle (1) présentant un prolongement (13a) s'étendant au-delà de son attache au moteur de pivotement (9), prolongement auquel le ressort de véhicule (13) est fixé par l'une de ses extrémités.

2. Suspension de roue selon la revendication 1, **caractérisée en ce qu'**entre le moteur de pivotement (9) et le bras de contrôle (1) et/ou entre le moteur de pivotement (9) et la carrosserie de véhicule (8) est disposé un élément d'amortissement mécanique.

3. Suspension de roue selon l'une quelconque des revendications 1 ou 2, **caractérisée en ce que** le ressort de véhicule (13) est un ressort pneumatique.

4. Suspension de roue selon l'une quelconque des revendications 1 à 3, **caractérisée en ce que** le moteur de pivotement (9) fonctionne de manière hydraulique et est relié, par des conduites hydrauliques (10, 11), à une pompe hydraulique (12) régulée.

5. Suspension de roue selon la revendication 4, **caractérisée en ce que** la pompe hydraulique (12) est une pompe à cellules semi-rotatives fonctionnant électriquement.

6. Suspension de roue selon la revendication 4 ou 5, **caractérisée en ce que** la pompe hydraulique (12) comporte un dispositif de régulation hydraulique (29, 30, 31, 32, 33, 34, 35, 36) relié aux conduites hydrauliques (10, 11), pour maintenir une différence de pression hydraulique prédéterminée entre les pressions à l'intérieur des conduites hydrauliques (10, 11).

7. Suspension de roue selon la revendication 6, **caractérisée en ce qu'**un transmetteur de valeurs de consigne (25), commandé électriquement, est accouplé à la pompe hydraulique (12) pour régler la différence de pression hydraulique prédéterminée.
